# EUROPÄISCHE PATENTSCHRIFT

(11) **EP 2 345 866 B1**
(45) Veröffentlichungstag und Bekanntmachung des Hinweises auf die Patenterteilung: **29.03.2017**
(21) Anmeldenummer: 10195912.0
(22) Anmeldetag: 20.12.2010
(51) Int. Cl.: F41G 1/38, G02B 23/14, G02B 7/04, G02B 23/04

(54) **Parallaxefreies Zielfernrohr**
Parallax-free telescopic sight
Lunette de visée sans axe parallèle

(30) Priorität: 19.01.2010 DE 102010005123
(43) Veröffentlichungstag der Anmeldung: 20.07.2011
(73) Patentinhaber: SCHMIDT & BENDER GmbH & Co. KG, 35444 Biebertal (DE)
(72) Erfinder: Tesmar, Manuela, 61191, Rosbach v. d. Höhe (DE); Helke Karen, Hesse, 35934, Giessen (DE); vom Hagen, Christoph Hilmar, 35390, Giessen (DE)
(74) Vertreter: Patentanwälte Olbricht Buchhold Keulertz

(56) Entgegenhaltungen:
- DE-U1- 29 720 737
- DE-U1-202006 000 977
- DE-U1-202007 001 576

## Beschreibung

Die Erfindung betrifft ein Zielfernrohr gemäß dem Oberbegriff von Anspruch 1.

Zielfernrohre von Schusswaffen werden zur Vergrößerung des Zielobjekts verwendet. Es sind sowohl Zielfernrohre mit feststehender Vergrößerung, als auch solche mit variabler Vergrößerung bekannt. Gebräuchliche Zielfernrohre bestehen aus verschiedenen optischen Linsen, einer Zielhilfe und einer Höhen- und Seitenverstellung. Die optischen Linsen umfassen ein Objektiv, ein Umkehrsystem und ein Okular. Die Vergrößerung des Zielfernrohrs kann durch das Umkehrsystem bewirkt werden. Die Zielfernrohre weisen zwei Bildebenen auf von denen eine erste näher am Objektiv und eine zweite näher am Okular angeordnet ist. In wenigstens einer der beiden Bildebenen ist die Zielhilfe angeordnet. Als Zielhilfe können, je nach Verwendungszweck, verschiedenen Zielmarkierungen wie beispielsweise Strichplattenabsehen oder eingestrahlte Leuchtzielmarken eingesetzt werden.

Beim Anvisieren eines Zielobjekts mit einem Zielfernrohr kann ein Parallaxefehler entstehen. Dieser tritt auf, wenn sich die Zielmarkierung und das von den Linsen abgebildete Objekt nicht in einer Ebene befinden. Die Zielmarkierung tritt also aus der Bildebene heraus. Handelsübliche Zielfernrohre weisen häufig eine Entfernung auf, die parallaxefrei ist. Diese Entfernung wird üblicherweise als Justierentfernung bezeichnet und kann je nach Verwendungszweck des Zielfernrohrs unterschiedlich sein. Bei Entfernungen die von der Justierentfernung unterschiedlich sind, kann das Ziel nicht sicher erfasst werden. Dies führt dazu, dass das Auge des Schützen ein vergleichsweise hohes Maß an Akkommodationsarbeit leisten muss und folglich schneller ermüdet.

Neben dieser Konstruktionsart sind auch Zielfernrohre mit einem Parallaxenausgleich im Objektiv bekannt. Von Nachteil hierbei ist jedoch, dass der Parallaxenausgleich nur mit einer beweglichen Optik und einer aufwendigen Mechanik bewirkt werden kann. Diese schlägt sich sowohl im Gewicht des Zielfernrohrs, als auch in dessen Dimensionierung nieder. Zielfernrohre mit einem Parallaxenausgleich im Objektiv sind daher relativ unhandlich und somit insbesondere für den längeren Gebrauch auf Schusswaffen wenig zweckmäßig.

Häufig müssen allerdings variable Zielfernrohre in weit auseinanderliegenden Vergrößerungsbereichen nahezu parallaxefrei verwendbar sein. Beispielsweise müssen sich Soldaten während langer Einsätze mit unterschiedlichen Einsatzsituationen zurechtfinden, die unterschiedliche Vergrößerungen erfordern. Im Häuserkampf finden kleine (3 bis 5-fach) Vergrößerungen Anwendung, während im offenen Gefechtsgebiet üblicherweise große Vergrößerungen (8 bis 12-fach) erforderlich sind. Dies alles soll, damit der Soldat nicht mehrere Zielfernrohre mit sich führen muss, idealerweise in einem kleinen kompakten Zielfernrohr vereint sein.

Die Druckschrift DE 20 2007 001 576 U1 offenbart ein Zielfernrohr gemäß des Standes der Technik.

Aufgabe der vorliegenden Erfindung ist daher, ein Zielfernrohr zu entwickeln, dass die oben genannten Nachteile vermeidet und mindestens zwei nahezu parallaxefreie Justierentfernungen, nämlich eine für den Nahbereich und eine für den Fernbereich, bereitstellt.

Hauptmerkmale der Erfindung sind im kennzeichnenden Teil von Anspruch 1 angegeben. Ausgestaltungen sind Gegenstand der Ansprüche 2 und 3.

Bei einem Zielfernrohr, wobei zwischen einem Objektiv und einem Okular zwei Bildebenen vorgesehen sind, von denen eine erste Bildebene näher am Objektiv und eine zweite Bildebene näher am Okular angeordnet ist, und wobei zwischen den Bildebenen ein Umkehrsystem mit darin befindlichen Umkehrlinsen, angeordnet ist, sieht die Erfindung vor, dass die Umkehrlinsen für eine erste Justierentfernung und eine zweite Justierentfernung mittels einer Verstelleinrichtung derart zueinander verstellbar sind, dass das Bild in der zweiten Bildebene zwischen Zielbild und Zielmarke parallaxefrei ist.

Das Umkehrsystem mit seinen Umkehrlinsen wird für die Vergrößerungsfunktion des Zielfernrohrs ohnehin benötigt. Erfindungsgemäß werden die Umkehrlinsen zusätzlich zur kleinsten Vergrößerung nochmals zueinander verstellt. Dies bewirkt, dass das Umkehrsystem auf eine kurze Justierentfernungen wie beispielsweise 3 Meter eingestellt wird. Im Bereich dieser nahen Entfernungen ergibt sich für diese zweite Justierentfernung keine Abweichung zwischen Ziel und Zielmarke. Vorteilhaft bei dieser erfindungsgemäßen Lösung ist, dass der Schütze Ziele auf diesen kurzen Entfernungen sicher erfassen kann. Die Ermüdung der Augen durch ständige Akkommodationsarbeit zwischen Zielmarke und Bild wird vermieden. Der Schütze kann dadurch länger und genauer sein Objekt anvisieren.

Ein weiterer Vorteil in der erfindungsgemäßen Ausgestaltung ist, dass ein so ausgebildetes Zielfernrohr sehr kompakt und leicht gebaut werden kann. Auf eine aufwendige Mechanik und Optik innerhalb des Objektivs zur Kompensation der Parallaxe kann verzichtet werden, da der Schütze in seinen Arbeitsbereichen, dem Nahbereich nahe der zweiten Justierentfernung sowie dem Fernbereich nahe der ersten Justierentfernung, bereits konstruktionsbedingt parallaxefrei visieren kann. Der Verzicht auf diese komplexen Mechaniken und Optiken zur Vermeidung von Parallaxefehlern, macht ein erfindungsgemäßes Zielfernrohr günstig in der Anschaffung und robust im Gebrauch. Zudem bringt es eine vorteilhafte Gewichtsersparnis mit einher.

Besonders bevorzugt sieht die Erfindung vor, dass die Verstelleinrichtung aus einer Führungshülse und wenigstens zwei in dieser Führungshülse angeordneten Fassungen, welche die Umkehrlinsen enthalten, besteht. Diese Ausbildung der Verstelleinrichtung sorgt für eine robuste und dauerhaft präzise Lagerung der Umkehrlinsen. Vorzugsweise sind die Fassungen und die Führungshülse gleitend zueinander gelagert. Dadurch können die Umkehrlinsen innerhalb der Führungshülse ohne weitere technische Maßnahmen genau geführt werden. Die optische Qualität verbessert sich damit. Ferner sind die Umkehrlinsen leicht aus den Fassungen zu entnehmen und gegebenenfalls zu reinigen oder auszutauschen.

Eine Weiterbildung der Erfindung sieht vor, dass die Führungshülse in einer Schneckenhülse gleitend gelagert ist, wobei die Schneckenhülse eine erste schneckenförmige Ausnehmung, in der ein erster Mitnehmerstift entlang der Längsachse geführt gelagert ist, und eine weitere schneckenförmige Ausnehmung, in der ein zweiter Mitnehmerstift entlang der Längsachse geführt gelagert ist, aufweist. Der erste Mitnehmerstift ist dabei in der ersten Fassung und der zweite Mitnehmerstift in der zweiten Fassung festgelegt. Die Führungshülse verfügt dabei ebenfalls über eine Aussparung, die aber im Gegensatz zu den Ausnehmungen der Schneckenhülse linear-parallel zur Längsachse verläuft.

Die so ausgebildete kinematische Verbindung zwischen Schneckenhülse und Fassung ist eine einfache aber hoch präzise Möglichkeit die Umkehrlinsen relativ zueinander zu bewegen. Dreht man die Schneckenhülse auf der Führungshülse so verschieben sich die Umkehrlinsen, da sie über die Mitnehmerstifte dem Axialverlauf der schneckenförmigen Ausnehmungen folgen müssen.

Besonders bevorzugt sind die schneckenförmigen Ausnehmungen Bahnkurven, die derart gewählt sind, dass sich die Umkehrlinsen für den Vergrößerungswechsel so bewegen, dass sich der Abstand der Bilder zwischen der ersten Bildebene und der zweiten Bildebene nicht ändert. Die Abbildung des ersten Zwischenbilds auf das zweite für alle Vergrößerungen optimal ist. Die erfindungsgemäße zweite Justierentfernung kann vorteilhafterweise durch eine Erweiterung der Bahnkurven realisiert werden.

Beträgt beispielsweise der Winkelbereich in dem die Schneckenhülse auf der Führungshülse gedreht werden kann 180°, so wäre der Vergrößerungsbereich auf einen Winkelbereich von 0° bis 150° verteilt. Der Bereich von 150° bis 180° würde zum Nachfokusieren der Umkehrlinsen genutzt. Relevant wäre allerdings nur die Endlage hier also die Position bei 180°, da das Bild im Zwischenbereich (150° bis 179°) nicht definiert wird. Der Winkelbereich ist ausschließlich vom benötigten Bewegungsumfang abhängig. So könnten neben 180° auch andere Werte wie beispielsweise 170°, 190° oder 200° in Betracht kommen.

Eine wichtige Ausführungsform der Erfindung sieht vor, dass die Zielmarke ein Leuchtpunkt ist. Dieses Zielmarkenmuster stellt insbesondere bei flüchtigen Schüssen eine gute Visierhilfe dar. Die zentrale Schusspunktlage bietet eine gute Erkennbarkeit in kurzer Zeit, da das Zielbild nur minimal verdeckt wird. Durch das geringe Ausmaß an erforderlicher Akkommodationsarbeit ist der Leuchtpunkt auch bei längeren Einsätzen äußerst vorteilhaft.

Die zweite Bildebene ist hinter dem Umkehrsystem, welches die Vergrößerungseinrichtung des Zielfernrohrs umfasst, angeordnet. Aufgrund der Positionierung der Zielmarke in der zweiten Bildebene wird diese bei einem Vergrößerungswechsel nicht vergrößert bzw. verkleinert, sondern bleibt vielmehr unverändert. Dadurch kann über den gesamten Vergrößerungsbereich eine feine Struktur der Zielmarke sichergestellt werden. Dies ist insbesondere bei flächigen Zielmarkenmustern vorteilhaft. Beispielsweise können punktförmige Zielmarkenmuster vom Auge in besonders kurzer Zeit ohne große Akkommodationsarbeit erfasst werden, aus diesem Grund ist ihr Einsatz häufig wünschenswert. Ein solches Muster würde allerdings bei einer Vergrößerung der Visierhilfe einen großen Teil des Zielbildes verdecken. Die Positionierung der Zielmarke in der zweiten Bildebene stellt daher in äußerst vorteilhafter Weise die Nutzung verschiedenster Zielmarkenmuster sicher, da die Zielmarke das Anvisieren des Ziels unterstützt und das Zielobjekt auch bei großen Vergrößerungen nicht verdeckt. Dies wirkt sich äußerst positiv auf die Treffsicherheit aus und steigert ferner den Komfort des Zielfernrohrs.

Es ist weiterhin von Vorteil, dass es sich bei der Zielmarke um eine von einer Projektionseinrichtung eingestrahlte Zielmarke handelt. Mit Ausnahme des Strahlenteilers sind sämtliche für das Erzeugen der Zielmarke erforderlichen Komponenten außerhalb des Strahlengangs angeordnet. Der Strahlenteiler wird von dem Schützen jedoch nicht wahrgenommen. Diese Ausgestaltung ermöglicht somit, dass im ausgeschalteten Zustand von dem Schützen ausschließlich das Absehen, welches in der ersten Bildebene angeordnet ist realisiert wird. Infolgedessen wird durch die erfindungsgemäße Gestaltung ein Zielfernrohr zur Verfügung gestellt, welches die verschiedenen Vorteile von Visierhilfen in den unterschiedlichen Bildebenen nutzbar macht. Wird die Zielmarke in der zweiten Bildebene nicht benötigt, so kann sie abgeschaltet werden, wobei für den Schütze keinerlei Beeinträchtigung des Zielbildes auftritt.

Eine bevorzugte Ausgestaltung der Erfindung sieht vor, dass der Strahlenteiler in der zweiten Bildebene angeordnet ist. Dadurch wird ein Mittel zur Verfügung gestellt, mit Hilfe dessen die Zielmarke in der zweiten Bildebene sichtbar ist.

Es ist weiterhin bevorzugt, dass der Strahlenteiler eine gegenüber der optischen Achse geneigte Grenzfläche eines Prismas ist. Durch diese Ausgestaltung kann die Zielmarke in besonders einfacher und kostengünstiger Weise bereitgestellt werden. Der Strahlenteiler ist ein optisches Bauteil, welches ermöglicht, dass die von der Projektionseinrichtung erzeugte Zielmarke vom Okular aus sichtbar ist.

Vorteilhaft bei der Verwendung wenigstens eines Prismas als Strahlenteiler ist weiterhin, dass das vom Objektiv einfallende Licht, beispielsweise verglichen mit einem halbdurchlässigen Spiegel, kaum absorbiert oder reflektiert wird. Die Zieloptik weist daher auch bei schlechten Sichtverhältnissen eine gute Zielbildqualität auf.

Eine Weiterbildung der Erfindung sieht vor, dass der Strahlenteiler von unmittelbar aneinander anliegenden, gegenüber der optischen Achse geneigten Grenzflächen zweier Prismen gebildet ist, wobei die Prismen aus Materialien mit unterschiedlichen Brechungsindizes gefertigt sind. Neben der stabilen Bauweise des Strahlenteilers kann auf diese Weise zudem der Kontrast der Zielmarke verbessert werden. Durch eine geeignete Wahl der Materialien und des Neigungswinkels der aneinanderstoßenden Prismenflächen, kann zudem ein Mittel zur Verfügung gestellt werden, das es ermöglicht, dass z. B. nur der rote Anteil des von der Projektionseinrichtung eingestrahlten Lichts zum Objektiv reflektiert wird, während die anderen Wellenlängen durchgelassen werden. Die Zielmarke wird ohne störende Reflexion mit dem vom Objektiv einfallenden Bild überlagert.

Bevorzugt ist weiterhin, dass auf einem der Prismen wenigstens ein Teil der Projektionseinrichtung angeordnet ist. Diese Ausgestaltung ermöglicht, dass die Bauteile zunächst miteinander verbunden und schließlich gemeinsam eingesetzt werden können. Eine derartige Anordnung ist äußerst kompakt und zudem wird durch das Einsetzen einer vorgefertigten Baugruppe der Herstellprozess vereinfacht. Eine weitere Ausgestaltung sieht vor, dass die Projektionseinrichtung eine Blende umfasst. Vorteilhaft dabei ist, dass eine Blende, welche eine entsprechend der vorgesehenen Zielmarkenform geformte Ausnehmung aufweist, ein besonders kostengünstiges und einfaches Mittel zur Erzeugung verschiedener Zielmarkenmuster und -größen darstellt. Auf diese Weise kann beispielsweise ein Leuchtpunkt oder ein Fadenkreuz als Zielmarkenmuster mit einfachen Mitteln kostengünstig erzeugt werden.

Eine bevorzugte Ausgestaltung des Zielfernrohrs sieht ferner vor, dass die Projektionseinrichtung eine Batterie aufweist. Die Batterie stellt die Stromversorgung der Projektionseinrichtung zuverlässig sicher. Im Handel sind Batterien mit verhältnismäßig kleinen Abmessungen verfügbar, so dass die optische Gestalt des Zielfernrohrs durch die Stromversorgung nahezu nicht beeinflusst wird. Eine im Gehäuse vorgesehene Ersatzbatterie bietet zusätzliche Sicherheit.

Es ist weiterhin besonders bevorzugt, dass für die Lichtquelle ein Regler vorgesehen ist. Dies ist besonders vorteilhaft, da das Zielfernrohr durch den Regler den jeweiligen Lichtverhältnissen angepasst werden kann. Bei guten Lichtverhältnissen kann beispielsweise eine sehr schwache Intensität der Zielmarke gewählt werden. Dadurch wird verhindert, dass die Zielmarke das einfallende Zielbild überstrahlt.

Weitere Merkmale, Einzelheiten und Vorteile der Erfindung ergeben sich aus dem Wortlaut der Ansprüche sowie aus den folgenden Beschreibungen von Ausführungsbeispielen anhand der Zeichnungen.

Es zeigen:
- Fig. 1: einen Innentubus eines erfindungsgemäßen Zielfernrohrs;
- Fig. 2: ein Zielfernrohr im Längsschnitt;
- Fig. 3: ein Zielfernrohr in der Seitenansicht;
- Fig. 4: Strahlengang eines erfindungsgemäßen zielfernrohrs;
- Fig. 5: eine "abgewickelte Schneckenhülse".

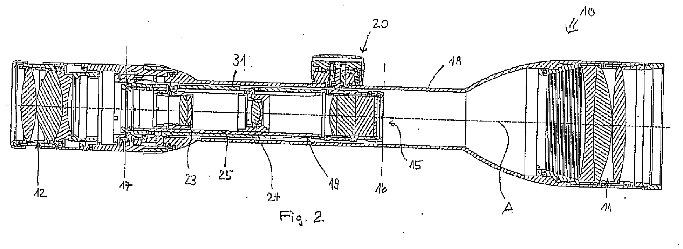

Figur 2 zeigt ein allgemein mit 10 bezeichnetes Zielfernrohr. Der Längsschnitt durch das Zielfernrohr 10 zeigt einen Außentubus 18, in dem ein Objektiv 11, ein Innentubus 19, und ein Okular 12 angeordnet sind. Zwischen dem Objektiv 11 und dem Okular 12 sind die erste Bildebene 16 und die zweite Bildebene 17 vorgesehen. In der ersten Bildebene 16 ist ein Absehen 15 angeordnet. Der Innentubus 19 ist an seiner dem Okular 12 zugewandten Seite in einem Kardanlager beweglich gelagert. Am Außentubus 18 ist ein Verstellturm 20 festgelegt. Der Verstellturm 20 verfügt über ein Mittel, welches am Innentubus 19 anliegt. Durch den Verstellturm 20 kann ein Verstellen des Innentubus z.B. zum Ausgleich von Seitenwind bewirkt werden. Der Innentubus 19 weist eine Führungshülse 25 auf, in welcher zwei in Fassungen eingefasste Umkehrsystemlinsen 23,24 angeordnet sind. Die Umkehrsystemlinsen 23,24 sind entlang der optischen Achse A beweglich gelagert.

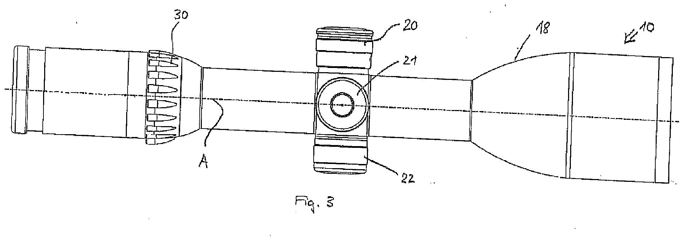

Die in Figur 3 dargestellte Seitenansicht eines aus dem Stand der Technik bekannten Zielfernrohrs 10 zeigt drei Verstelltürme 20, 21 und 22, welche an einem Außentubus 18 angeordnet sind, sowie eine optische Achse A. Das Zielfernrohr 10 verfügt ferner über eine Verstelleinrichtung 30, mit Hilfe derer die Vergrößerung des Zielfernrohrs 10 variiert werden kann.

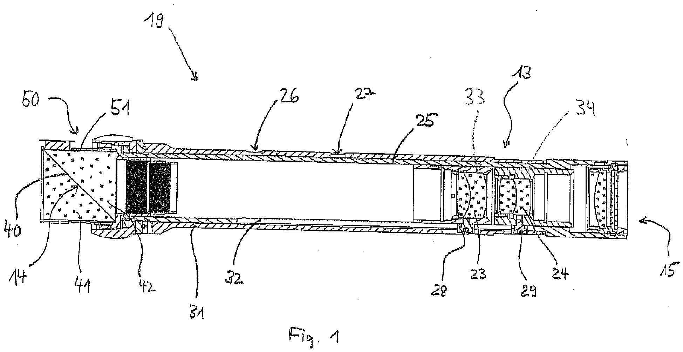

In Figur 1 ist ein Innentubus 19 eines erfindungsgemäßen Zielfernrohrs 10 dargestellt. Der Innentubus 19 verfügt über eine Schneckenhülse 31, welche zwei schneckenförmige Ausnehmung 26,27 aufweist. Die schneckenförmigen Ausnehmungen 26,27 sind bevorzugt als Schlitze ausgebildet. In der Schneckenhülse 31 ist eine Führungshülse 25 angeordnet. Die Führungshülse 25 weist eine Aussparung 32 auf, welche bevorzugt als Längsschlitz ausgebildet ist und parallel zur Längsachse des Innentubus 19 verläuft. In der Führungshülse 25 ist ein Umkehrsystem 13 angeordnet. Das Umkehrsystem 13 umfasst zwei Umkehrsystemlinsen 23,24, welche in Fassungen 33,34 eingefasst sind, und über einen Mitnehmerstift 28 bzw. 29, der jeweils in einer der schneckenförmigen Ausnehmungen 26 bzw. 27 der Schneckenhülse 31 gelagert ist, bewegbar sind.

Der Innentubus 19 umfasst außerdem einen Strahlenteiler 40. Dieser wird von unmittelbar aneinander anliegenden Grenzflächen zweier Prismen 41,42 gebildet, wobei die Prismen 41,42 aus Materialien mit unterschiedlichen Brechungsindizes gefertigt sein können. Auf dem Prisma 42 ist eine als Leuchtdiode ausgebildete Lichtquelle 51 einer Projektionseinrichtung 50 angeordnet. Neben der Leuchtdiode können auch andere geeignete Lichtquellen verwendet werden.

Mit Hilfe der Projektionseinrichtung 50 kann eine Zielmarke 14 auf den Strahlenteiler 40 erzeugt werden. Die Projektionseinrichtung 50 kann unter Umständen eine zwischen der Lichtquelle 51 und dem Prisma 42 angeordnete Blende, welche eine entsprechend der Zielmarke 14 geformte Ausnehmung aufweist umfassen. Außerdem verfügt die Projektionseinrichtung 50 über eine nicht dargestellt Batterie zur Stromversorgung und über einen ebenfalls nicht dargestellten dimm- und schaltbaren Regler. An der dem Strahlenteiler 40 gegenüber-liegenden Seite des Innentubus 19 ist ein Absehen 15 angeordnet. Das Absehen 15 kann eine Strichplatte sein, deren Muster durch z.B. Ätzen oder das Einbringen von Metalldrähten erzeugt wurde. Das Muster kann beispielsweise ein Fadenkreuz sein.

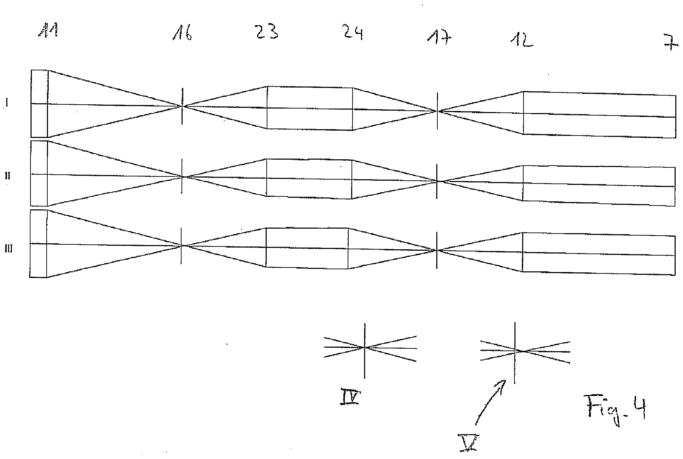

Figur 4 zeigt den Strahlengang zwischen Objektiv 11, erster Bildebene 16, erster Umkehrlinse 23, zweiter Umkehrlinse 24, zweiter Bildebene 17, Okular 12 sowie Austrittspupille 7. Im Zustand I steht das Ziel auf der ersten Justierentfernung, Bild und Bildebenen sind in beiden Bildebenen 16, 17 deckungsgleich (Detail IV). Zustand II zeigt das Objektiv im Nahbereich, Bild und Bildebene fallen nicht zusammen. Es entsteht Parallaxe (Detail V). Figur 4 zeigt im Zustand III eine Position, wo die Umkehrlinsen erfindungsgemäß derart ausgerichtet sind, dass Bild und Bildebene in der zweiten Bildebene zusammen fallen. Das Zielfernrohr ist auf die zweite Justierentfernung eingestellt.

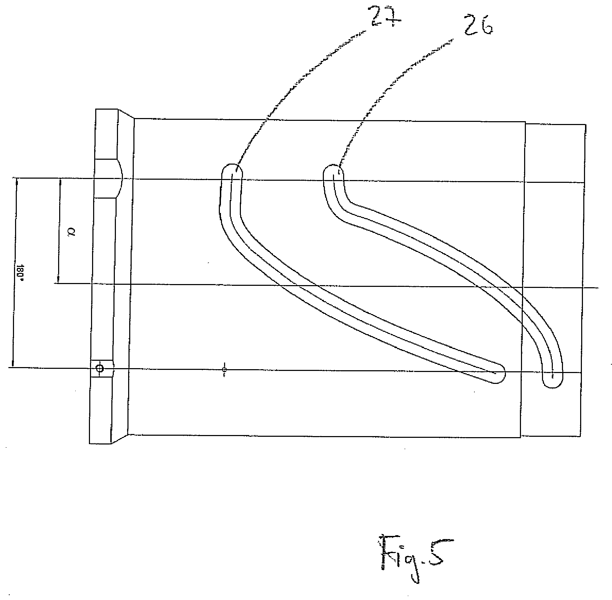

Figur 5 zeigt die schneckenförmigen Ausnehmungen Bahnkurven, die derart gewählt sind, dass sich die Umkehrlinsen für den Vergrößerungswechsel so bewegen, dass sich der Abstand der Bilder zwischen der ersten Bildebene und der zweiten Bildebene nicht ändert. Die Abbildung des ersten Zwischenbilds auf das zweite ist für alle Vergrößerungen optimal. Die erfindungsgemäße zweite Justierentfernung kann vorteilhafterweise durch eine Erweiterung der Bahnkurven realisiert werden.

Beträgt der Winkelbereich in dem die Schneckenhülse auf der Führungshülse gedreht werden kann 180°, so wäre der Vergrößerungsbereich 180 abzgl. alpha, d.h. auf einem Winkelbereich von 0° bis 150° verteilt. Der Bereich von 150° bis 180° würde zum Nachfokussieren der Umkehrlinsen genutzt. Relevant wäre allerdings nur die Endlage hier also die Position bei 180°, da das Bild im Zwischenbereich (150° bis 179°) nicht definiert wird. Der Winkelbereich ist ausschließlich vom benötigten Bewegungsumfang abhängig. So könnten neben 180° auch andere Werte wie beispielsweise 170°, 190° oder 200° in Betracht kommen.

Die Erfindung ist nicht auf eine der vorgeschriebenen Ausführungsformen beschränkt, sondern durch die Ansprüche definiert.

### Bezugszeichenliste

- A: optische Achse

- 7: Austrittspupille
- 10: Zielfernrohr
- 11: Objektiv
- 12: Okular
- 13: Umkehrsystem
- 14: Zielmarke
- 15: Absehen
- 16: erste Bildebene
- 17: zweite Bildebene
- 18: Außentubus
- 19: Innentubus
- 20,21,22: Verstellturm
- 23,24: Umkehrsystemlinse
- 25: Führungshülse
- 26,27: schneckenförmige Ausnehmung
- 28,29: Mitnehmerstift
- 30: Verstelleinrichtung
- 31: Schneckenhülse
- 32: Aussparung
- 33,34: Fassungen

- 40: Strahlenteiler
- 41,42: Prisma
- 50: Projektionseinrichtung
- 51: Lichtquelle

## Patentansprüche

1. Zielfernrohr (10), wobei zwischen einem Objektiv (11) und einem Okular (12) zwei Bildebenen (16, 17) vorgesehen sind, von denen eine erste Bildebene (16) näher am Objektiv (11) und eine zweite Bildebene (17) näher am Okular (12) angeordnet ist, und wobei zwischen den Bildebenen (16,17) ein Umkehrsystem (13) mit darin befindlichen Umkehrlinsen (23, 24), angeordnet ist, wobei die Umkehrlinsen (23, 24) für eine erste Justierentfernung (JA) mittels einer Verstelleinrichtung derart zueinander verstellbar sind, dass das Bild in der zweiten Bildebene (17) zwischen einem Zielbild und einer Zielmarke (14) parallaxefrei ist, **dadurch gekennzeichnet, dass** die Umkehrlinsen (23, 24) für eine von der ersten Justierentfernung (JA) abweichende zweite Justierentfernung (JB) mittels der Verstelleinrichtung derart zueinander verstellbar sind, dass das Bild in der zweiten Bildebene (17) zwischen dem Zielbild und der Zielmarke (14) parallaxefrei ist, wobei die Verstelleinrichtung aus einer Führungshülse (25) und wenigstens zwei in dieser Führungshülse angeordneten Fassungen (33, 34), welche die Umkehrlinsen (23, 24) enthalten, besteht, wobei die Führungshülse (25) in einer Schneckenhülse (31) gleitend gelagert ist, wobei die Schneckenhülse (31) eine erste schneckenförmige Bahnkurve (26), in der ein erster Mitnehmerstift (28) entlang der Längsachse geführt gelagert ist, und eine weitere schneckenförmige Bahnkurve (27), in der ein zweiter Mitnehmerstift (29) entlang der Längsachse geführt gelagert ist, aufweist, wobei der erste Mitnehmerstift (28) in der ersten Fassung (33) und der zweite Mitnehmerstift (29) in der zweiten Fassung (34) festgelegt sind.

2. Zielfernrohr (10) nach Anspruch 1, **dadurch gekennzeichnet, dass** die Fassungen (33 34) und die Führungshülse (25) gleitend zueinander gelagert sind.

3. Zielfernrohr (10) nach Anspruch 1 oder 2, **dadurch gekennzeichnet, dass** die Zielmarke (14) ein Leuchtpunkt ist.

## Claims

1. Riflescope (10) wherein between an objective (11) and an eyepiece (12) two image planes (16, 17) are provided, of which a first image plane (16) is arranged closer to the lens (11) and a second image plane (17) closer to the eyepiece (12), and wherein between the image planes (16,17) a reversing system (13) having therein reversing lenses (23, 24) is arranged, wherein the reversing lenses (23, 24) for a first adjustment distance (JA) are so mutually adjustable by means of an adjustment device that the image in the second image plane (17) between a target image and a target mark (14) is free of parallax, **characterized in that** the reversing lenses (23, 24), for one from the first adjustment distance (JA) separated second adjustment distance (JB), are so mutually adjustable by means of the adjustment device that the image in the second image plane (17) between the target image and the target mark (14) is parallax free, wherein the adjustment device consists of a guide sleeve (25) and at least two in this guide sleeve arranged mountings (33, 34) which contain the reversing lenses (23, 24), wherein the guide sleeve (25) is slidably mounted in a screw sleeve (31), wherein said screw sleeve (31) has a first winding curve (26) in which is mounted a first driving pin (28) along the longitudinal axis, and a further winding curve (27) is mounted in which a second driving pin (29) is mounted along the longitudinal axis, wherein the first driving pin (28) in the first mounting (33) and the second driving pin (29) in the second mounting (34) are fixed.

2. Riflescope (10) according to claim 1, **characterized in that** the mountings (33, 34) and the guide sleeve (25) are slidably mounted with respect to each other.

3. Riflescope (10) according to claim 1 or 2, **characterized in that** the target mark (14) is a luminous point.

## Revendications

1. Lunette de visée (10), dans laquelle il est prévu entre un objectif (11) et un oculaire (12) deux plans-images (16, 17), dont un premier plan-image (16) est agencé plus près de l'objectif (11) et dont un second plan-image (17) est agencé plus près de l'oculaire (12), dans laquelle est agencé, entre les plans-images (16, 17), un système d'inversion (13) dans lequel se trouvent des lentilles d'inversion (23, 24), dans laquelle les lentilles d'inversion (23, 24) peuvent être déplacées l'une par rapport à l'autre pour une première distance de réglage (JA) au moyen d'un dispositif de déplacement en sorte que l'image au second plan-image (17) entre une image cible et un repère de visée (14) soit exempte de parallaxe , **caractérisée en ce que** les lentilles d'inversion (23, 24) peuvent être déplacées l'une par rapport à l'autre pour une seconde distance de réglage (JB) différente de la première distance de réglage (JA) au moyen du dispositif de déplacement en sorte que l'image au second plan-image (17) entre le plan-image et le repère de visée (14) soit exempte de parallaxe, dans laquelle le dispositif de déplacement est constitué d'une douille de guidage (25) et d'au moins deux montures (33, 34) agencées dans cette douille de guidage, qui contiennent les lentilles d'inversion (23, 24), dans laquelle la douille de guidage (25) est montée à coulissement dans une douille hélicoïdale (31), dans laquelle la douille hélicoïdale (31) présente une première trajectoire hélicoïdale (26), dans laquelle est montée guidée à coulissement une première broche d'entraînement (28) le long de l'axe longitudinal, et une autre trajectoire hélicoïdale (27), dans laquelle une seconde broche d'entraînement (26) est montée guidée le long de l'axe longitudinal, dans laquelle la première broche d'entraînement (28) est fixée dans la première monture (33) et la seconde broche d'entraînement (29) dans la seconde monture (34).

2. Lunette de visée (10) selon la revendication 1, **caractérisée en ce que** les montures (33, 34) et la douille de guidage (25) sont montées mutuellement à coulissement.

3. Lunette de visée (10) selon la revendication 1 ou 2, **caractérisée en ce que** le repère de visée (14) est un point lumineux.
